# EUROPEAN PATENT APPLICATION

(11) **EP 3 872 333 A1**
(43) Date of publication of application: **01.09.2021**
(21) Application number: 19874839.4
(22) Date of filing: 30.09.2019
(51) Int. Cl.: F03B 13/14, F03B 3/12, F03B 11/00

(54) **METHOD AND SUBMERSIBLE EQUIPMENT FOR ELECTRICITY GENERATION WITH MARINE ENERGY**

(30) Priority: 23.10.2018 CN 201811238057
(71) Applicant: Guangdong Ocean University, Zhanjiang, Guangdong 524000 (CN); Shenzhen Institute of Guangong Ocean University, Shenzhen, Guangdong 518000 (CN)
(72) Inventor: LING, Changming, Zhanjiang, Guangdong 524000 (CN); ZHANG, Mingyu, Zhanjiang, Guangdong 524000 (CN); LI, Rusong, Zhanjiang, Guangdong 524000 (CN); ZHONG, Yin, Zhanjiang, Guangdong 524000 (CN); LI, Jun, Zhanjiang, Guangdong 524000 (CN); XU, Qing, Zhanjiang, Guangdong 524000 (CN)
(74) Representative: Cabinet Chaillot
(86) International application number: PCT/CN2019/109411
(87) International publication number: WO 2020/083013

(57) **Abstract**

The present invention discloses a semisubmersible method and equipment for electricity generation with marine energy. The method is implemented by means of a separately constructed offshore platform or based on an existing offshore platform. Electricity generating equipment and an impeller mechanically connected to the electricity generating equipment are mounted on the platform. Blades of the impeller are arranged perpendicular to the flow direction of a fluid along the water surface. The upper part of the impeller is arranged above the sea surface; the lower part is submerged in seawater. The marine energy pushes the impeller to rotate, thereby driving the electricity generating equipment to generate electricity. When the blades are rotating in the circumferential direction, the blades underwater continuously work under a fluid thrust, and the blades in the air are free from the effects of fluid impact resistance even while moving in the direction opposite that of the fluid flow, thus greatly reducing power loss, and increasing electricity generation efficiency. In addition, the rotating wheel and blade structural design of the impeller increases the thrust applied to a main shaft of the impeller, reduce water energy loss, and increase ocean energy conversion efficiency. Moreover, a housing sleeving the impeller allows the screening of ocean winds of different directions and the reasonable utilization of the thrust of a same-direction wind to increase the electricity generating capacity of the electricity generating equipment.

## Description

### TECHNICAL FIELD

The present invention relates to offshore electricity generating equipment, and in particular, to a method and equipment for electricity generation with marine energy.

### BACKGROUND

In the 21st century, human beings mainly depend on fossil energy such as petroleum and coal to meet human needs, but the above non-renewable energy will eventually be exhausted one day, and human beings may face a serious energy crisis. Therefore, it is particularly important to promote the development and application of clean energy, reduce pollution and improve energy use efficiency. The ocean is rich in energy, such as wave energy (transverse wave), tidal current energy (directional wave), ocean circulation (surface circulation) and the like. The energy has the advantages of high energy density, wide distribution and the like, and is inexhaustible renewable clean energy.

Wave energy refers to kinetic energy and potential energy of sea surface wave. Wave power generation is to produce electric energy by taking wave energy ans power. At present, there are various wave electricity generating equipment, including mechanical, pneumatic, hydraulic and other types, but most of the wave electricity generating equipment have the disadvantages and limitations of heavy structure, high investment, low reliability, high terrain dependence and the like. Therefore, in the future, the wave electricity generating equipment will take the wave gathering technology, the improvement of wave energy density and conversion efficiency, device refinement and cost control as the main development direction. Light, reliable and high-efficiency wave electricity generating equipment will be the mainstream of future development. The operation stability of the wave electricity generating equipment depends on the wave energy flow density. Generally, when the wave height is 0.5 m to 4 m and the wave energy flow density is greater than 2 KW/M, it is the effective time of wave energy development, that is, when the wave height is greater than 0.5 m, the electricity generating equipment may work effectively and normally, but when the wave height is greater than 4 m, the electricity generating equipment will be damaged.

By taking the South China Sea and the East China Sea as examples, the waves in the areas are based on surges with long periods and also include wind waves with short periods. The wave direction is based on S-SW, the peak line of the wind waves is short, the wave height is 0.5 m to 2 m, and the period is within 6 seconds. The surges have regular shape and long wave peak and are arranged tidily. The annual average wave height of the surges is about 1.5 m and the wave period is long and is 10 s to 16 s. The effective time of the highest development of the wave energy in the South China Sea and the East China Sea is January, and the occurrence frequency of the effective time of the wave energy in this month is about 80%. The occurrence frequency of the effective time of the wave energy in April is slightly low and is 30% to 50%, and the occurrence frequency of the effective time in other months is 50% to 80%. The wave height, wave period and frequency in the areas can meet operation of the wave electricity generating equipment.

The wind speed is the main factor that determines the wave size. In general, when the wind reaches level 10 or above, the wave height may reach 12 m, which is equivalent to the height of the four-storeyed building, even more than 15 m. The waves caused by the common wind of level 6 or 7 may reach to 3 m to 6 m high. In China's coastal areas, the effective wave height is about 2 m to 3 m, the period is 9 s, the wave power may reach 17 kw/m to 39 kw/m, and the wave power in Bohai Bay is higher and reaches 42 kw/m.

By taking the evaluation data of wave energy resource in Zhoushan Islands, Zhejiang, China as an example, in the area between Dongji Island and Zhongkuai Island, the spectral peak period is 7 s to 9 s, the wave energy power stored in waves accounts for about 50% of the whole year, and the wave energy produced by the effective wave height of 0.8 m to 1.8 m accounts for about 70% of the whole year; in the sea area in the east of Taimen Town and Xiazhi Town, the spectral peak period is 6 s to 9 s, the wave energy power stored in waves accounts for about 70% of the whole year, and the wave energy produced by the effective wave height of 0.8 m to 1.8 m accounts for more than 60% of the whole year; and in the sea area to the east of Bixiaxiang Dazui Island and to the north of Shengshan mountain, the spectral peak period is 6.5 s to 8.5 s, the wave energy power stored in waves accounts for about 50% of the whole year, especially the reserve of the wave energy of 6.5 s to 7.5 s is large, the wave energy produced by the effective wave height of 0.8 m to 1.8 m accounts for about 60% of the whole year, the wave energy produced by the effective wave height of 0.8 m to 2.2 m accounts for about 75% of the whole year, the annual average wave energy power density is 5 kW/m to 6 kW/m, and the wave resources are rich.

It can be seen from the above data that there are rich and various kinds of wave energy in many sea areas in China, including wind waves and surges and further including nearshore waves. The wave periods are different. In the area with rich wave energy, the wave flow velocity is mostly between 3 m/s and 8 m/s. The continuous flow time of the waves along a certain direction is different, and the longer time may reach half a day. Generally speaking, the sea areas in China are rich in wave energy resources, with high availability and high development rate.

The tidal current energy refers to kinetic energy of tidal water during horizontal movement, also known as ocean current energy, which is the kinetic energy generated by the seawater subjected to the gravitation action of the moon and the sun and is a kind of renewable energy. The tidal current is derived from the relative motion of the earth, the moon and the sun and the tide generating force, and changes periodically along with the rise and fall of the tide. The tidal current may be divided into rotating flow and reciprocating flow according to the movement form, and may be divided into diurnal tide and semi-diurnal tide according to the property. The average periods of the diurnal tide and the semi-diurnal tide are 24h 50min and 12h 25min respectively. In the vast ocean, since there is no reference object, the tidal current is not obvious, but in the waterway or bay among the shore, the strait and the island, the tidal current of the seawater is very fast, and the coastal current collection enables the tidal current to be richer, which is a favorable condition for the utilization of the tidal current; and the tidal current has a certain periodicity, which provides a reliable basis for the utilization of the tidal current.

The main difference between the tidal current energy and the wave energy is that the tidal current energy is water flow caused by tides, which mostly exists in waterways or bays among the shore, the strait and the island. Relative to the waves, the tidal current energy changes stably and regularly, and the tidal current energy changes the size and direction twice a day along with the rise and fall of the tide. The wave energy refers to the kinetic energy and potential energy of the waves on the sea surface. The energy of the wave is directly proportional to the square of the wave height, the motion period of the wave and the width of the wave coming surface. The wave energy is one of the most unstable energy in the ocean energy and is generated by wind transferring energy to the ocean, and is essentially formed by absorbing wind energy. The energy transfer rate of the wave is relevant to the wind speed and is also relevant to the distance between the wind and water (that is, the wind area).

In the evaluation of tidal current energy resources in China, Zhejiang Province has the richest near tidal current energy resource, about 5.19 million KW, accounting for more than 50% of the total tidal current energy resources in China. 96% of tidal current energy resources on the coast of Zhejiang are concentrated in Zhoushan sea area and the north of the Hangzhou Bay mouth. The tidal current energy resource enriched areas in Zhoushan sea area are mainly located in Guishan Hangmen, Xihoumen water way and Guanmen waterway, etc. The usable area of the tidal energy resources is 8000.6 KM2, the theoretical reserve of the tidal current energy resource (63 waterway sections) is about 4.328 KW, and the installed capacity of 15 key sea areas (waterways) is about 1.274 KW (referring to Hou Fang, Yu Huaming, Bao Xianwen, Wuhe. Analysis Of Tidal Current Energy In Zhousha Sea Area Based On High Resolution Numerical Modeling [J]. Acta Energiae Solaris Sinica, 2014, 35 (01): 125-133).

For another example, in Shandong sea area in China, the areas with high tidal current energy flow velocity are mainly concentrated in the coastal sea areas and various waterways near the Miaodao Islands in the Bohai Strait. The Chengshantou and the waterways near the Bohai strait have the highest flow velocity, the average flow velocity may exceed 0.9 M/S, the local average flow velocity even may reach 1.0 M/S, the energy flow density distribution is similar to the flow velocity distribution, the waterways in the Bohai strait has the highest energy flow density which may reach 600 W/M², the Chengshanjiao sea area has the second highest energy flow density which may reach 500 W/M², and the sea areas near Sanshanzi Island (Southern Shandong Peninsula), the Yellow River Estuary sea area and the Jiaozhou Bay mouth have the third highest energy flow density which may reach 120 W/M². Chengshantou is located at the easternmost of Shandong Peninsula, surrounded by the sea on three sides. The water depth outside the corner changes drastically. The water depth of the 1 KM offshore sea area may reach 50 M. The special geographical position and topographic structure make the tidal current flow velocity very high, and the measured flow velocity is up to 2 M/S. The sea area, belonging to an irregular semidiurnal tidal zone, has small tidal range, with an average tidal range of about 0.8 m, but the tidal current in the sea area is regular semidiurnal tide, dominated by reciprocating current, and the flow direction is northeast-southwest. Obviously, the tidal current resource in the sea area is rich, the sea area is open, the water depth is moderate, the distance from the shore is relatively short, and the development and utilization prospect is wide (referring to Li Cheng, Gao Jia, Li Wenshan, Li Huan, Cai Renhan, Yangyi. Tidal Current Energy Resource Assessment in Offshore of Shandong Province [J]. Marine Development and Management, 2017,34(01):75~80; Wu He, Wang Xin, Han Linsheng. Assessment Of Extractable Energy Of Tidal Current At Chengshantou Cape [J]. Oceanologia et Limnologia Sinica 2013,44(03):570~576).

According to the relevant data, Jiaozhou Bay is taken as the research sea area. The tide level of the sea area changes from 2.5 M to 2.0 M within one month, the maximum flow velocity is 2 M/s, and the average energy flow density of the water way is generally 280 W/M². The tidal level of the sea area outside Chengshantou changes in a range of about 0.7 M, and the tidal current flow velocity is between 1.5 M/S and 3 M/S. According to the assessment conditions of the tidal current energy resources, the distance from the shore is basically less than 5 KM, and the water depth (theoretical low-tide surface) is greater than 25 M, so the minimum water depth of the tidal current energy may reach 25 M, but with the increase of the water depth, the tidal current flow velocity is reduced and the availability is less and less.

In summary, some regions (mainly in Liaoning, Zhejiang, Shandong, etc.) in China are rich in tidal current energy resources which may be utilized. The sea area where the tidal current energy exists is the available interval of the tidal current energy when the tide level is within 25 m below the sea surface. Generally, the underwater flow velocity is between 1.5 m/s and 3 m/s, the maximum tidal current flow velocity may reach 3 m/s, and the average periods of the diurnal tide and the semi-diurnal tide are 24 h and 12 h respectively. Moreover, the direction of the tidal current flow velocity of different sea areas may be predicted, but below the sea surface, with the increase of the depth of the seawater, the tidal current flow velocity will gradually decrease, the availability is lower and lower, the blades of the impeller may work for power generation by the horizontal flow thrust of the tidal current of 1 m above water and 3 m below water, the tidal current flow velocity within the range is between 1.5 m/s and 3 m/s, which is an ideal working sea area, required by the work of the tidal current electricity generating equipment.

The ocean circulation refers to that the seawater forms an end-to-end connected, spatial-temporal change continuous, relatively independent and stable circulation system or swirl flowing from a certain sea area to another sea area. The ocean surface circulation is closely related to wind distribution, including horizontal circulation and vertical circulation. Ocean circulation flows in the North Pacific, South Pacific, Atlantic Ocean and Indian Ocean. As the second largest warm current (circulation) in world oceans, black tide originated in the equatorial waters of the Pacific, with a width of 100 km to 200 km, depth of 400 m to 500 m and a flow velocity of 3-4 km/h (about 1 m/s). The flow of the black tide main axis is about 54 Sv (1Sv=106m³/s), which is equivalent to 20 times of the total flow of rivers all over the world. Most of the ocean circulations last for a long time, up to several months, and part of the circulation (the Indian Ocean) is greatly affected by monsoon and flows continuously along a certain direction in one season.

In addition to the surface circulation, the ocean circulation also has undercurrents that secretly flow in the lower layer and upwelling from bottom to top, all of which have a certain directionality and periodicity, for example, the clockwise circulation on the surface of the North Pacific Ocean, the small circulation of the Bay of Bengal of the Indian Ocean clockwise from east to west in summer and the small circulation from east to west in winter. The tidal current energy electricity generating equipment may utilize the horizontal circulation in the shallow layer below the sea surface (horizontal flow field). The horizontal circulation of the upper flow field has high flow velocity and has continuity and directionality in time and space. The marine energy electricity generating equipment may utilize the flow of the circulation in the horizontal direction to push the blades of the impeller to work for electricity generation.

The existing marine energy electricity generating equipment, such as the wave energy electricity generating equipment and the like, usually places the impeller in the seawater and utilizes the flowing seawater to push the blades of the impeller to rotate for electricity generation. The rotating wheel blades of the impeller are arranged obliquely or perpendicular to the flow direction of the water surface and the fluid like the rotating wheel blades of the turbine. When the rotating wheel blades go deep into the water, since the blades are annularly mounted and move circumferentially, in the process that the fluid impacts the blades along a direction perpendicular to the blade shaft to rotate the blade underwater for one circle, the moving direction of the first half circle of the blade is basically as same as the flow direction of the flow, the blade is subjected to the fluid thrust, but the moving direction of the blade in the second half circle is opposite to the flow direction of the fluid, and the blade is subjected to the resistance of the fluid at this time, that is, in the one-circle rotation period of the blade, the blade is subjected to the fluid thrust in the first half circle and is subjected to the resistance of the fluid in the second half circle, so by the working mode of the impeller, the work done by the fluid to push the blade is greatly lost and the electricity generation efficiency is improved. When the blades such as the rotating wheel blades of the turbine are arranged obliquely and are all embedded into the seawater, the blades are similarly subjected to the impact resistance of the fluid. Since the turbine type blades are arranged obliquely, the force to the water diversion surface of the blade is the tangential component of the impact force of the fluid, resulting in the upper limit of the working efficiency of the rotating wheel and the weak electricity generating capacity of the electric generator.

### SUMMARY

To overcome the defects in the prior art, the present invention provides a semisubmersible method and equipment for electricity generation with marine energy with high adaptability and high electricity generation efficiency.

The technical solution used in the present invention to solve the technical problem thereof is as follows:
a semisubmersible method for electricity generation with marine energy is implemented on the basis of an existing offshore platform or by means of a separately constructed offshore platform, wherein electricity generating equipment and an impeller mechanically connected to the electricity generating equipment are mounted on the platform; blades of the impeller are arranged perpendicular to the flow direction of a fluid along the water surface; the upper part of the impeller is arranged above the sea surface, and the lower part of the impeller is submerged in seawater; a depth of the impeller submerged into the seawater is 35% to 65% of a diameter of the impeller; and the marine energy pushes the impeller to rotate, thereby driving electricity generating equipment to generate electricity.

Semisubmersible equipment for electricity generation with marine energy for implementing the above method includes an offshore platform, wherein an electric generator is mounted on the offshore platform, the electric generator is connected to an impeller through a transmission mechanism, blades of the impeller are arranged perpendicular to the direction of a fluid flow along the water surface, the upper part of the impeller is located on the sea surface and the lower part of the impeller is submerged in seawater, and a depth of the impeller submerged into the seawater is 35% to 65% of a diameter of the impeller.

The offshore platform is a suspension platform, a float bowl is mounted on a side of the suspension platform, an impeller port is recessed in one side of the suspension platform, a mooring mechanism is mounted on a side, departing from the impeller port, of the suspension platform, and the impeller is located in the impeller port.

The periphery of the impeller is covered with a housing, the housing includes a wind shield and a meshed protective cover, the wind shield is fixed above the impeller port and semi-covers an outer side of the impeller, a hollow part on an inner side of the impeller is filled with the meshed protective cover, and a louver is arranged on the wind shield.

The mooring mechanism includes a sliding pipe arranged on the suspension platform, a plurality of sliding blocks sleeve the sliding pipe, a mooring rod is arranged on the sliding blocks, a fixed magnet is arranged at the tail end of the mooring rod, and two sides of the fixed magnet are hinged to locking clamping blocks.

The transmission mechanism includes a commutator and a shaft coupler, a first reversing gear and a second reversing gear which are at right angles to each other and are engaged with each other are arranged in the commutator, the first reversing gear is connected to a rotating shaft of the impeller, and the second reversing gear is connected to a rotating shaft of the electric generator through the shaft coupler.

The housing, the wind shield and the louver are made of glass reinforced plastic materials; and the impeller and the blades of metal materials, and corrosion-resistant coating is sprayed on surfaces of the impeller and the blades.

The housing, the wind shield, the impeller and the blades are made of glass reinforced plastic materials.

The blades are straight plate-shaped and are arranged on the impeller circumferentially and uniformly.

The blades are bent sheets with an offset angle and are arranged on the surface of the impeller circumferentially and uniformly.

Each of the blades is radially provided with a main convex arc-shaped portion, a secondary convex arc-shaped portion, a second concave arc-shaped portion, a first concave arc-shaped portion and an arc tip portion which are sequentially in head-to-tail connection, lengths of arc shapes decrease sequentially, the first concave arc-shaped portions of the blades are engaged with the surface of the impeller and are arranged on the impeller circumferentially and uniformly, and two rows of radially adjacent blades form an included angle with each other.

The present invention has the following beneficial effects: the method is implemented by means of a separately constructed offshore platform or based on an existing offshore platform. Electricity generating equipment and an impeller mechanically connected to the electricity generating equipment are mounted on the platform. Blades of the impeller are arranged perpendicular to the flow direction of a fluid along the water surface. The upper part of the impeller is arranged above the sea surface and the lower part is submerged in seawater. The marine energy pushes the impeller to rotate, thereby driving the electricity generating equipment to generate electricity. When the blades are rotating in the circumferential direction, the blades underwater continuously work under a fluid thrust, and the blades in the air are free from the effects of fluid impact resistance even while moving in the direction opposite that of the fluid flow, thus greatly reducing power loss and increasing electricity generation efficiency. It is suitable for electricity generation with wave energy (transverse wave), tidal current energy (directional wave) and marine energy of ocean circulation. In addition, the rotating wheel and blade structural design of the impeller may increase the thrust applied to a main shaft of the impeller, reduce water energy loss, and increase ocean energy conversion efficiency. Moreover, a housing sleeving the impeller allows the screening of ocean winds of different directions and the reasonable utilization of the thrust of a same-direction wind to increase the electricity generating capacity of the electricity generating equipment. The generated electric energy may be directly connected to the grid for transmission or stored in a storage battery.

### BRIEF DESCRIPTION OF DRAWINGS

The present invention is further described with reference to the accompanying drawings and embodiments.
FIG 1 is a structural schematic diagram according to the present invention;
FIG. 2 is a sectional view of an impeller;
FIG. 3 is a schematic structural diagram of a mooring mechanism;
FIG. 4 is a schematic structural diagram of a transmission mechanism;
FIG. 5 is a structural diagram of a second implementation manner of a blade;
FIG. 6 is a structural diagram of a third implementation manner of a blade; and
FIG. 7 is a schematic diagram of a third implementation manner of a blade.

### DETAILED DESCRIPTION OF EMBODIMENTS

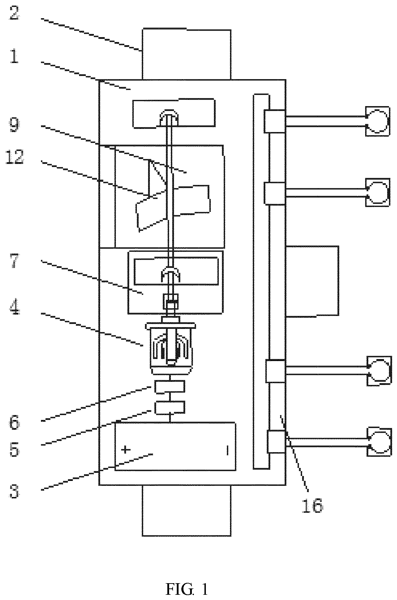

Referring to FIG. 1, a semisubmersible method for electricity generation with marine energy is implemented by means of a separately constructed offshore platform or based on an existing offshore platform, wherein electricity generating equipment and an impeller mechanically connected to the electricity generating equipment are mounted on the platform; blades of the impeller are arranged perpendicular to the flow direction of a fluid along the water surface; the upper part of the impeller is arranged above the sea surface, and the lower part of the impeller is submerged in seawater; a depth of the impeller submerged into the seawater is 35% to 65% of a diameter of the impeller; and the marine energy pushes the impeller to rotate, thereby driving electricity generating equipment to generate electricity. The generated electric energy may be directly connected to the grid for transmission or stored in a storage battery. It is suitable for electricity generation with wave energy (transverse wave), tidal current energy (directional wave) and marine energy of ocean circulation.

Semisubmersible equipment for electricity generation with marine energy for implementing the above method includes an offshore platform, wherein a storage battery 3 and an electric generator 4 are mounted on the offshore platform; the storage battery 3 is electrically connected to the electric generator 4 sequentially through an inverter 5 and a voltage stabilizer 6; the electric generator 4 is connected to an impeller 8 through a transmission mechanism 7; blades 12 of the impeller 8 are arranged perpendicular to the flow direction of a fluid along the water surface; the upper part of the impeller 8 is located on the sea surface and the lower part of the impeller 8 is submerged into seawater; and a depth of the impeller 8 submerged into the seawater is 35% to 65% of a diameter of the impeller 8. The blades 12 are impacted by the fluid to do work for electricity generation, the impeller 8 is parallel to the sea surface, the blades 12 are perpendicular to the flow direction of the fluid, the blades 12 on the lower half circle of the impeller 8 are located below a sea level, the remaining blades are exposed in the air, the blades 12 in the seawater are driven by the seawater to do work for electricity generation, and the blades 12 above the water rotates without load. By the working mode, when the blades 12 move in a circumferential direction, the blades underwater are subjected to a fluid thrust, even if the moving direction of the blades 12 above water is opposite to the flow direction of the fluid, but the blades are already in the air and are not subjected to the fluid impact resistance, thereby greatly reducing power loss and greatly improving electricity generation efficiency.

The offshore platform is a suspension platform 1, a float bowl 2 is mounted on a side of the suspension platform 1, an impeller port 9 is recessed in one side of the suspension platform 1, a mooring mechanism is mounted on a side, departing from the impeller port 9, of the suspension platform 1, and the impeller 8 is located in the impeller port 9. The float bowls may be mounted on a front side and a rear side of the suspension platform 1. By mainly relying on the buoyancy of the float bowls 3, the suspension platform 1 may properly adjust a height in a direction perpendicular to the sea level with the rise and fall of the sea level. The electricity generating equipment can work normally when the sea level and the wave height change.

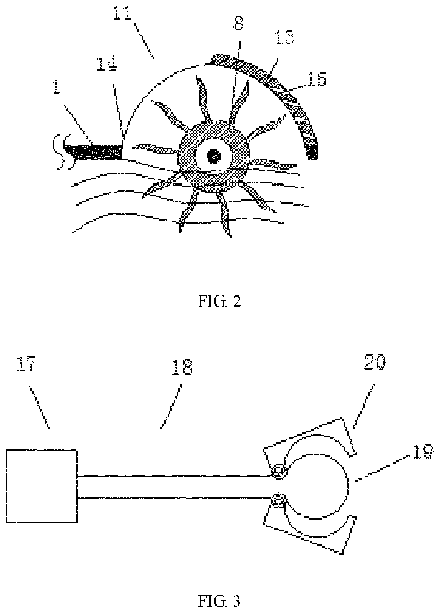

Referring to FIG. 2, the periphery of the impeller 8 is coated with a housing 11, the housing 11 includes a wind shield 13 and a meshed protective cover 14, the wind shield 13 is fixed above the impeller port 9 and semi-covers an outer side of the impeller 8, a hollow part on an inner side of the impeller 8 is filled with the meshed protective cover 14, and a louver 15 is arranged on the wind shield 13. In the actual working process of the electricity generating equipment, the blades 12 of the impeller 8 are very susceptible to sea winds, so the wind shield 13 is mounted on the suspension platform at the front end of the blades 12. In combination with the louver 15, the sea wind of which the direction is as same as the rotating direction of the blades 12 can be screened out, wind power is converted into a thrust, the wind together with the marine energy do work on the blades 12, and the wind after work flows out of the louver 15. When the wind direction is opposite to the rotating direction of the blades 12, the wind power is a resistance, the wind shield isolates reverse wind power at this time, thereby preventing the reverse wind power from doing negative work on the blades, hindering rotation of the blades and improving the work doing efficiency of rotation of the blades. The meshed protective cover 14 is mainly used for preventing marine organisms or marine garbage from damaging the blades 12 so as to avoid the influence on the normal work of the impeller 8.

Referring to FIG. 3, the mooring mechanism includes a sliding pipe 16 arranged on the suspension platform 1, a plurality of sliding blocks 17 sleeve the sliding pipe 16, a mooring rod 18 is arranged on each of the sliding blocks 17, a fixed magnet 19 is arranged at the tail end of the mooring rod 18, and two sides of the fixed magnet 19 are hinged to locking clamping blocks 20. The mooring mechanism is mainly configured to connect and fix various articles at sea, the sliding blocks 17 can slide on the sliding pipe 16, the locking clamping blocks 20 on the mooring rod 18 may be hinged to a cylindrical part or equipment, and the locking clamping blocks 20 can be adsorbed on a metal body, so that the suspension platform 1 is parallel to the sea level in the working sea area. The direction is fixed to ensure that sea in a certain direction can continuously impact the blades 12 of the impeller 8, so that the suspension platform 1 will not rotate randomly on the sea surface, but the suspension platform 1 has a considerable degree of freedom in a direction perpendicular to the sea level. The mooring mechanism cooperates with the float bowls, so that the suspension platform is fixed in a horizontal direction and may move up and down in the direction perpendicular to the sea level so as to cope with complex sea environments. The mooring mechanism is mainly fixed or adsorbed on the objects at sea such as ships, lighthouses, offshore platforms and the like.

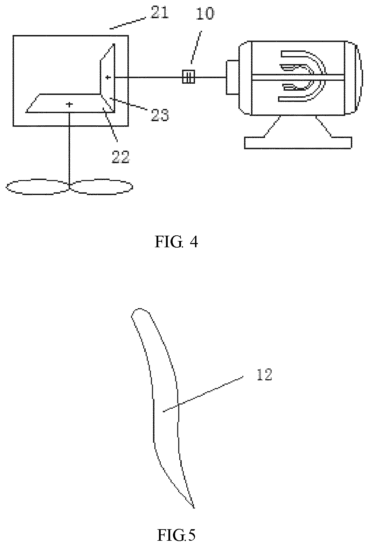

Referring to FIG. 4,the transmission mechanism 7 includes a commutator 21 and a shaft coupler 10, a first reversing gear 22 and a second reversing gear 23 which are at right angles to each other and are engaged with each other are arranged in the commutator 21, the first reversing gear 22 is connected to a rotating shaft of the impeller 8, and the second reversing gear 23 is connected to a rotating shaft of the electric generator 4 through the shaft coupler 10.Due to the complex marine environment, the transmission direction of the impeller 8 is changed by the transmission mechanism 7, so that the electricity generating equipment can adapt to the change of the marine environment well.

The housing 11, the wind shield 13 and the louver 15 may be made of metal materials and may also be made of glass reinforced plastic materials; and the impeller 8 and the blades 12 are made of metal materials, and corrosion-resistant coating is sprayed on surfaces of the impeller and the blades, thereby enhancing the corrosion resistance of the impeller and the blades and prolonging the service life of the electricity generating equipment.

The blades 12 are straight plate-shaped and are arranged on the impeller 8 circumferentially and uniformly. This is a first embodiment of the blades 12. The impeller 8 can do work safely and reliably for electricity generation.

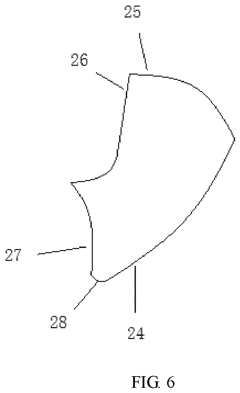

Referring to FIG. 6, in a second embodiment, the blades 12 are bent sheets with an offset angle and are arranged on the surface of the impeller 8 circumferentially and uniformly. The blade 12 of the embodiment makes the whole impeller 8 no longer bloated and has considerable flexibility, and the blade has the bent offset angle, so that the contact probability of the blade 12 and the fluid in the sea is higher, thus increasing the work done by the impeller 8.

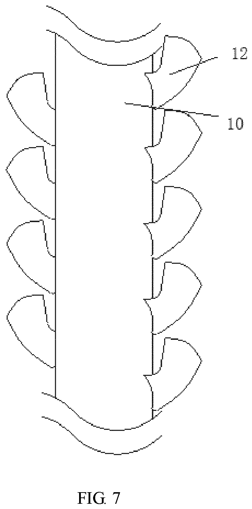

Referring to FIG. 7, in a third embodiment, each of the blades 12 is radially provided with a main convex arc-shaped portion 24, a secondary convex arc-shaped portion 25, a second concave arc-shaped portion 26, a first concave arc-shaped portion 27 and an arc tip portion 28 which are sequentially in head-to-tail connection, lengths of arc shapes decrease sequentially, the first concave arc-shaped portions 27 of the blades 12 are engaged with the surface of the impeller 8 and are arranged on the impeller 8 circumferentially and uniformly, and two rows of radially adjacent blades 12 form an included angle with each other. The seawater obliquely enters the impeller 8 through the front row of blades 12, thereby reducing the impact force of the seawater to the impeller 8 and guiding the thrust to the blades 12. Since the adjacent two rows of blades 12 form an included angle with each other, the seawater passes through the front row of blades and then may impact the rear row of blades to do work, so that the contact surface of the blades 12 and the fluid can be enlarged, the work and electricity generation capability can be greatly improved, the loss of water energy is reduced and the conversion efficiency of the impeller 8 on the marine energy is enhanced.

The impeller according to the present invention is semi-submerged into the seawater. When the blades moves in the circumferential direction, the blades above water continues to do work by the fluid thrust, but the blades in the air will not be subjected to the fluid impact resistance even if the moving direction is opposite to the flow direction of the fluid, thereby greatly reducing power loss and improving electricity generation efficiency. In addition, the rotating wheel and blade structural design of the impeller may increase the thrust applied to the main shaft of the impeller, thereby reducing the loss of water energy and improving the conversion efficiency of the marine energy. The housing sleeving the impeller allows the screening of ocean winds of different directions and the reasonable utilization of the thrust of a same-direction wind to increase the electricity generating capacity of the electricity generating equipment.

The above embodiments cannot limit the protection scope of the present invention. Equivalent modifications and changes made by those skilled in the art without departing from the overall concept of the present invention still fall within the scoped included in the present invention.

## Claims

1. A semisubmersible method for electricity generation with marine energy, the method being implemented by means of a separately constructed offshore platform or based on an existing offshore platform, wherein electricity generating equipment and an impeller mechanically connected to the electricity generating equipment are mounted on the platform; blades of the impeller are arranged perpendicular to the flow direction of a fluid along the water surface; the upper part of the impeller is arranged above the sea surface, and the lower part of the impeller is submerged in seawater; a depth of the impeller submerged into the seawater is 35% to 35% of a diameter of the impeller; and the marine energy pushes the impeller to rotate, thereby driving electricity generating equipment to generate electricity.

2. Semisubmersible equipment for electricity generation with marine energy for implementing the above method, the equipment comprising an offshore platform, wherein an electric generator (4) is mounted on the offshore platform, the electric generator (4) is connected to an impeller (8) through a transmission mechanism (7), blades (12) of the impeller (8) are arranged perpendicular to the flow direction of a fluid along the water surface, the upper part of the impeller (8) is located on the sea surface and the lower part of the impeller (8) is submerged in seawater, and a depth of the impeller (8) submerged into the seawater is 35% to 65% of a diameter of the impeller (8).

3. The semisubmersible equipment for electricity generation with marine energy according to claim 2, wherein the offshore platform is a suspension platform (1), a float bowl (2) is mounted on a side of the suspension platform (1), an impeller port (9) is recessed in one side of the suspension platform (1), a mooring mechanism is mounted on a side, departing from the impeller port (9), of the suspension platform (1), and the impeller (8) is located in the impeller port (9).

4. The semisubmersible equipment for electricity generation with marine energy according to claim 2, wherein the periphery of the impeller (8) is covered with a housing (11), the housing (11) comprises a wind shield (13) and a meshed protective cover (14), the wind shield (13) is fixed above the impeller port (9) and semi-covers an outer side of the impeller (8), a hollow part on an inner side of the impeller (8) is filled with the meshed protective cover (14), and a louver (15) is arranged on the wind shield (13).

5. The semisubmersible equipment for electricity generation with marine energy according to claim 3, wherein the mooring mechanism comprises a sliding pipe (16) arranged on the suspension platform (1), a plurality of sliding blocks (17) sleeve the sliding pipe (16), a mooring rod (18) is arranged on the sliding blocks (17), a fixed magnet (19) is arranged at the tail end of the mooring rod (18), and two sides of the fixed magnet (19) are hinged to locking clamping blocks (20).

6. The semisubmersible equipment for electricity generation with marine energy according to claim 2, wherein the transmission mechanism (7) comprises a commutator (21) and a shaft coupler (10), a first reversing gear (22) and a second reversing gear (23) which are at right angles to each other and are engaged with each other are arranged in the commutator (21), the first reversing gear (22) is connected to a rotating shaft of the impeller (8), and the second reversing gear (23) is connected to a rotating shaft of the electric generator (4) through the shaft coupler (10).

7. The semisubmersible equipment for electricity generation with marine energy according to claim 4, wherein the housing (11), the wind shield (13) and the louver (15) are made of glass reinforced plastic materials; and the impeller (8) and the blades (12) are made of metal materials, and corrosion-resistant coating is sprayed on surfaces of the impeller (8) and the blades (12).

8. The semisubmersible equipment for electricity generation with marine energy according to claim 2, wherein the blades (12) are straight plate-shaped and are arranged on the impeller (8) circumferentially and uniformly.

9. The semisubmersible equipment for electricity generation with marine energy according to claim 2, wherein the blades (12) are bent sheets with an offset angle and are arranged on the surface of the impeller (8) circumferentially and uniformly.

10. The semisubmersible equipment for electricity generation with marine energy according to claim 2, wherein each of the blades (12) is radially provided with a main convex arc-shaped portion (24), a secondary convex arc-shaped portion (25), a second concave arc-shaped portion (26), a first concave arc-shaped portion (27) and an arc tip portion (28) which are sequentially in head-to-tail connection, lengths of arc shapes decrease sequentially, the first concave arc-shaped portions (27) of the blades (12) are engaged with the surface of the impeller (8) and are arranged on the impeller (8) circumferentially and uniformly, and two rows of radially adjacent blades (12) form an included angle with each other.
